# EUROPEAN PATENT APPLICATION

(11) **EP 2 743 842 A1**
(43) Date of publication of application: **18.06.2014**
(21) Application number: 13190640.6
(22) Date of filing: 29.10.2013
(51) Int. Cl.: G06F 17/30, G06F 21/62, H04L 9/00

(54) **Secure search processing system and secure search processing method**

(30) Priority: 13.12.2012 JP 2012272270
(71) Applicant: Hitachi Solutions, Ltd., Tokyo 140-0002 (JP)
(72) Inventor: Yoshino, Masayuki, Chiyoda-ku, Tokyo 100-8280 (JP); Sato, Keiichi, Shinagawa-ku, Tokyo 140-0002 (JP); Sato, Hisayoshi, Chiyoda-ku, Tokyo 100-8280 (JP); Sato, Yoshinori, Chiyoda-ku, Tokyo 100-8280 (JP)
(74) Representative: Moore, Graeme Patrick

(57) **Abstract**

A secure search processing system includes an information processing apparatus that calculates an exclusive OR of second information obtained by applying a one-way function to a search keyword and a second random number obtained with a random number generator, calculates an exclusive OR of a search value that is the calculation result and registration values in a database, and calculates an exclusive OR of a value obtained by applying the homomorphic function to a calculation result of an exclusive OR of a search value and registration values and a value obtained by applying a homomorphic function to a second random number, searches for an output value of the one-way function with which registration values in the database are associated using as a key a value obtained by applying the one-way function to a calculation result, and outputs a search result to an output interface.

## Description

### BACKGROUND ART

### Technical field

The present invention relates to a secure search processing system and a secure search processing method, and more specifically to a technique for reducing the time and effort required for managing a user's key and reducing information management risk when a leakage of the key occurs in secure search technology.

### Related Art

Opportunities to keep personally identifiable information on network systems have proliferated along with the rapid expansion of electronic commerce and the like. Accordingly, new information management risks such as leakage of information through the network have already appeared, while in the future highly sensitive information, such as genetic information as well as various information relating to each individual's medical care and health, are likely to become managed on such network systems.

Searchable encryption technologies, for example, which are capable of performing keyword searches of encrypted information, have been proposed as a solution to the above risks (see, for example, Japanese Laid-Open Patent Publication No. 2011-147074). In addition, a technology for preventing leakage of existing genetic information and sample genetic information as well as for searching for effective genetic information using searchable encryption technology and the like has also been proposed (see Japanese Laid-Open Patent Publication No. 2012-73693).

In the conventional technology, however, the keys used for encryption of search target data are required to be managed individually, which is cumbersome. In addition, there is the problem that the risk of information leakage cannot be sufficiently avoided when such keys have been compromised.

### SUMMARY

It is therefore an object of the present invention to provide a technique for reducing the time and effort required for managing a user's key and reducing information management risk when a leakage of the key occurs in secure search technology.

A secure search processing system of the present invention for solving the above problems has an information processing apparatus including:
a storage device that stores a database having stored a registration value that is a value of an exclusive OR of first information obtained by applying a search target information to a one-way function and a first random number, and an output value obtained when applying to the one-way function a result obtained by applying the first random number to a predetermined homomorphic function; and
a processor configured to:
   calculate an exclusive OR of second information obtained by applying to the one-way function a keyword for search received by an input interface and a second random number obtained with a random number generator to obtain a first calculation result, and calculate an exclusive OR of a search value that is the first calculation result and registration values in the database to obtain a second calculation result; and
   calculate an exclusive OR of a value obtained by applying to the homomorphic function the second calculation result of the exclusive OR of the search value and the registration values, and a value obtained by applying the second random number to the homomorphic function to obtain a third calculation value, search for an output value of the one-way function to which the registration values are associated in the database using as a key a value obtained by applying the third calculation result to the one-way function, and output a search result to an output interface.

Further, there is provided a secure search processing method implemented in an information processing apparatus storing in a storage device a database storing in association with each other a registration value that is an exclusive OR of first information obtained by applying a search target information to a one-way function and a first random number, and an output value obtained when applying to the one-way function a result obtained when applying the first random number to a predetermined homomorphic function, comprising:
calculating an exclusive OR of second information obtained by applying to the one-way function a keyword for search received at an input interface and a second random number obtained with a random number generator to obtain a first calculation result, and calculating an exclusive OR of a search value that is the first calculation result and registration values in the database to obtain a second calculation result; and
calculating an exclusive OR of a value obtained by applying to the homomorphic function the second calculation result of the exclusive OR of the search value and the registration values, and a value obtained by applying the second random number to the homomorphic function to obtain a third calculation result, and searching for an output value of the one-way function to which registration values in the database are associated using as a key a value obtained by applying the third calculation result to the one-way function, and outputting a search result to an output interface.

According to the present invention, the time and effort required for managing a user's key can be reduced and information management risk when a leakage of the key occurs can be reduced in secure search technology.

### BRIEF DESCRIPTION OF THE DRAWINGS

Fig. 1 is a network configuration diagram illustrating a secure search processing system of one embodiment of the present invention.
Fig. 2A is a configuration diagram of a client including the secure search processing system.
Fig. 2B is a configuration diagram of a server including the secure search processing system.
Fig. 3A is a flowchart illustrating a first example of a secure search processing method according to one embodiment of the present invention.
Fig. 3B is a diagram illustrating the concept of the first example of the secure search processing method.
Fig. 4A is a flowchart illustrating a second example of the secure search processing method.
Fig. 4B is a diagram illustrating the concept of the second example of the secure search processing method.
Fig. 5 is a flowchart illustrating a third example of the secure search processing method.
Fig. 6 is a diagram illustrating the concept of the third example of the secure search processing method.
Fig. 7 is a diagram illustrating an example of a first application of the secure search processing system.
Fig. 8 is a diagram illustrating an example of a second application of the secure search processing system.
Fig. 9 is a diagram illustrating an example of a third application of the secure search processing system.

### DETAILED DESCRIPTION

### First Embodiment

### ---System Configuration---

A detailed description of an embodiment of the present invention will be given in the following with reference to the drawings.

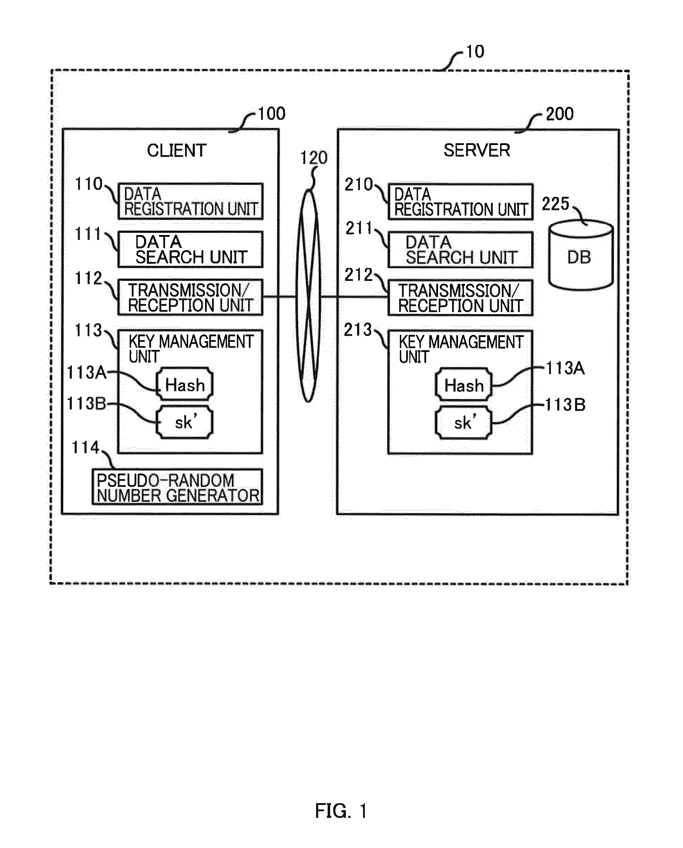

Fig. 1 is a network configuration diagram illustrating a secure search processing system 10 of the present embodiment. The secure search processing system 10 (hereinafter, system 10) shown in Fig. 1 is a computer system capable of reducing the time and effort required for managing a user's key and reducing information management risk when a leakage of the key occurs in secure search technology, and includes a client 100 and a server 200. Such a system 10 is based on the searchable encryption process technology disclosed in Japanese Laid-Open Patent Publication No. 2012-123614 by the present inventor, and is further configured to achieve a particularly excellent effect with regard to management load reduction and risk prevention when leakage of the key used for encrypting search target data occurs.

Next, a description will be given of the functions provided to of each of the client 100 and the server 200 that configure the system 10 of the present embodiment. The functions described in the following can be understood as functions implemented by executing respective programs included in each of the client 100 and the server 200. Note that although the example of system 10 in the present embodiment is shown to include the client 100 and the server 200, the server 200 can be assumed to function in a stand-alone manner without being coupled to a network 120. In this case, the server 200 is configured to be provided with all the various functions for registering and searching search target information in the client 100, or the various required processes are configured to be performed by directly receiving instruction from the user via the interface provided to the server 200.

The client 100 in the server 10 includes a data registration unit 110, a data search unit 111, a transmission/reception unit 112, a key management unit 113, and a pseudo-random number generator 114. Of these, the data registration unit 110 is a functional unit that performs encryption or hashing when registering data of the search target information to the server 200 side. More specifically, the data registration unit 110 applies the search target information to the hash function 113A (a type of a one-way function) to calculate first information, generates a first random number with the pseudo-random number generator 114, calculates the exclusive OR of the first information and the first random number, and sends to the server 200 (an information processing apparatus) a request including a registration value that is the output value of the exclusive OR to store into a database 225. Further, the data registration unit 110 applies to the hash function 113A the result obtained by applying the aforementioned first random number to a predetermined homomorphic function, and sends to the server 200 a request including the output value of the hash function 113A (i.e., the hash value) to store into the database 225 associatively with a registration value.

Note that the aforementioned hash function acts to output a value having a fixed length even when the input value has a large number of digits, so that when such hash function is employed as the one-way function the output values can have the same number of digits even when the number of digits of the process target values are varied, thus being beneficial in terms of allowing efficient execution of the subsequent processes.

The data search unit 111 is a functional unit that generates to the server 200 a request text indicating a request to search for data in the database 225. More specifically, the data search unit 111 receives a keyword used for a search at the input unit 105 and calculates an exclusive OR of second information obtained by applying the above received keyword to the hash function 113A and a second random number obtained with the pseudo-random number generator 114, and sends the search value that is the calculation result to the server 200. Further, the data search unit 111 encrypts with the key 113B the value obtained by applying the aforementioned second random number to the homomorphic function and sends the encrypted result to the server 200.

The transmission/reception unit 112 is a functional unit that transmits and receives information between the server 200 over the network 120 such as the Internet. The key management unit 113 is a functional unit that performs irreversible encryption and hash processing when registering data of the search target information, and management of the key used to generate a request text when searching data of the search target information.

On the other hand, the server 200 in the system 10 includes a data registration unit 210, a data search unit 211, a transmission/reception unit 212 and a key management unit 213. Further, the storage device 201 has stored therein the database 225. Of these, the data registration unit 210 is a functional unit that registers the ciphertext and the hash value sent from the client 100. More specifically, the data registration unit 210 executes a process of receiving the aforementioned registration value and the output value from the client 100 and storing the values into the database 225 of the storage device 201.

The data search unit 211 is a functional unit that performs a process of searching information in the database 225 based on the request text sent from the client 100 via the transmission/reception unit 212. More specifically, the data search unit 211 receives from the client 100 the aforementioned search value from the client 100 and calculates the exclusive OR of the search value and the registration values in the database 225. In addition, the data search unit 211 receives the encrypted result of the value obtained by applying the aforementioned second random number to the homomorphic function, decrypts the received encrypted result with the key 113B, and then calculates the exclusive OR of the decrypted value and the value obtained by applying the result obtained by calculating the exclusive OR of the aforementioned search value and the registration values to the homomorphic function. And thereafter, the data search unit 211 uses as the key the value obtained by applying the calculated value to the hash function 113A to search the output value of the aforementioned hash function 113A associated with the registration values in the database 225, and returns the search result to the client 100.

The transmission/reception unit 212 is a functional unit that transmits and receives information between the client 100 over the network 120 such as the Internet. The key management unit 213 is a functional unit that manages the key used to decrypt the request text.

The database 225 stores encrypted or hashed information sent from the data registration unit 100 of the client 100 via the transmission/reception units 112, 212. More specifically, the database 225 is one in which a registration value that is a value of an exclusive OR of first information obtained by applying the search target information to the hash function 113A in the client 100 and a first random number in the client 100, and an output value obtained by applying to the hash function 113A a result obtained by applying the first random number to a predetermined homomorphic function in the client 100, received by the server 200 from the client 100, are stored in association with each other.

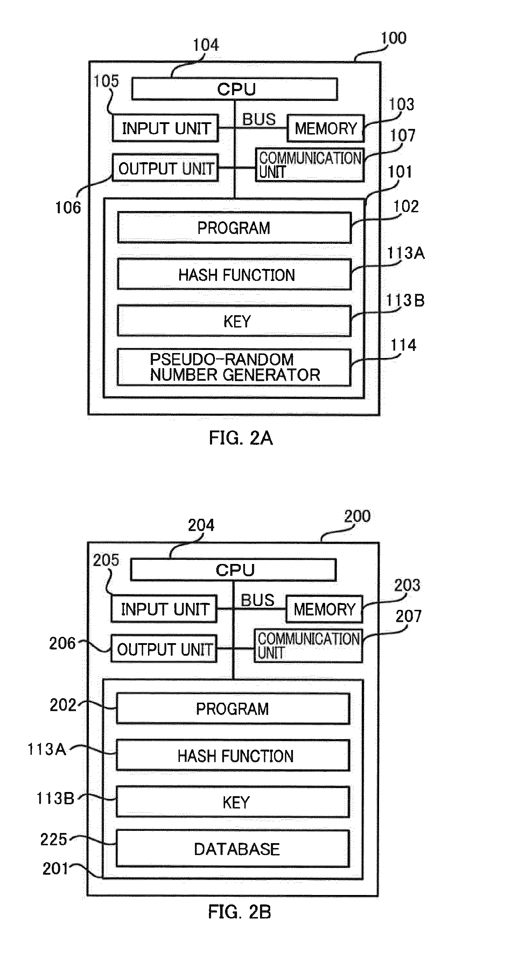

The hardware configuration of the devices that compose the secure search processing system 10 is as follows. As shown in Fig. 2A, the client 100 includes a storage device 101 configured with an appropriate nonvolatile storage device such as a hard disk drive, a memory 103 configured with a volatile memory device such as a RAM, a processor 104 such as a CPU that reads out and the like to the memory 103 a program 102 retained in the storage device 101 and executes the program 102 to perform centralized control of the client 100 itself as well as various determinations, calculations and control operations, an input unit 105 that receives a key input or a voice input from the user, an output unit 106 that is a display or the like that displays processing data, and a communication unit 107 that is coupled to the network 120 for handling communication processing between the server 200. Note that the storage device 101 has stored therein at least a hash function 113A, a key 113B and a pseudo-random number generator 114 in addition to a program 102 for implementing functions required as a part of the secure search processing system 10 of the present embodiment.

The server 200 also has a configuration approximately the same as that of the client 100. As shown in Fig. 2B, the server 200 includes a storage device 201, a memory 203, a processor 204, an input unit 205, an output unit 206 and a communication unit 207. Note that the storage device 201 has stored therein at least a hash function 113A, a key 113B and a database 225 in addition to a program 202 for implementing functions required as a part of the secure search processing system 10 of the present embodiment. The hash function 113A and the key 113B are with the same as those included in the client 100.

### ---First Example of Procedure---

A description of the actual procedures of the secure search processing method of the present embodiment will be given hereunder with reference to the drawings. Various operations corresponding to the secure search processing method described in the following are implemented by the client 100 and the server 200 configuring the system 10 reading out a program to a respective memory and the like, and executing the same. The program consists of code for performing various operations described in the following.

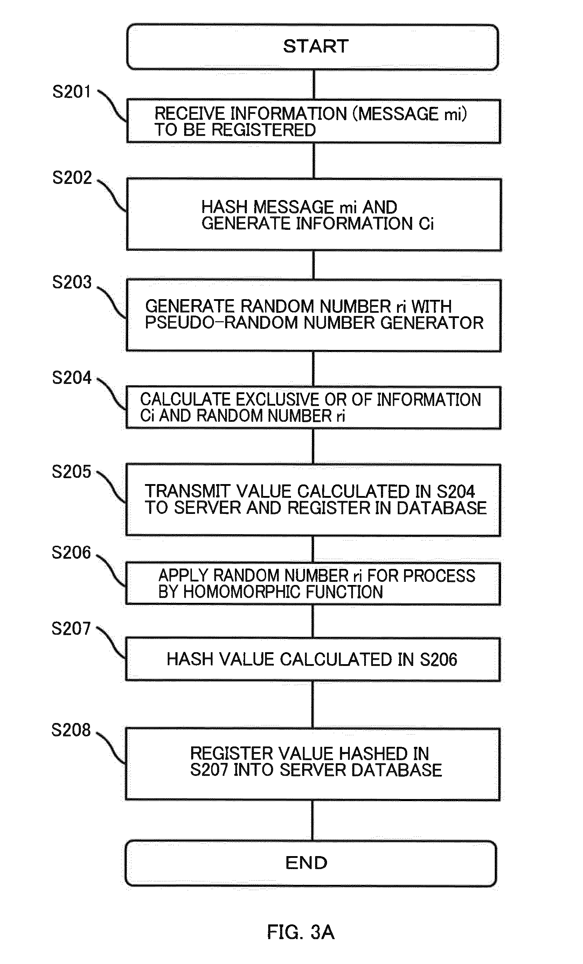

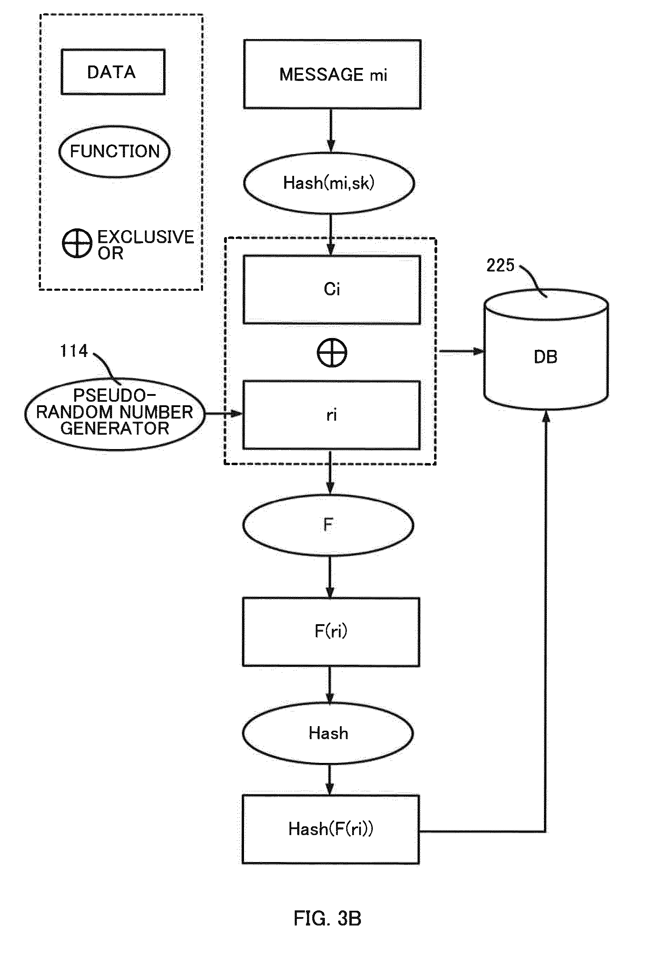

Fig. 3A is a flowchart illustrating a first example of the secure search processing method according to the present embodiment. Fig. 3B is a diagram illustrating the concept of the first example of the secure search processing method according to the present embodiment. Here, an aspect of the process of registering data of search target information in the system 10 will be given.

Firstly in this case, the data registration unit 110 of the client 100 receives at the input unit 105 a message "mi" that is information that the user wants to register (S201). Then, the data registration unit 110 performs hashing by applying the message "mi" received at the input unit 105 to the hash function 113A managed by the key management unit 113, and generates information "Ci" (first information) (S202). The use of an algorithm that renders it impossible to acquire the original plain text by decrypting the encrypted data, such as the hash function 113A (including the concept of a hash table), reduces the time and effort required for securing a level of security capable of handling concerns over leakage of the key.

Subsequently, the data registration unit 110 generates a random number "ri" (first random number) with the pseudo-random number generator 114 (S203). Then, the data registration unit 110 calculates an exclusive OR of the aforementioned information "Ci" and the random number "ri" (S204), and sends a storage request including this registration value that is the calculation result to the server 200 for registering into the database 225 of the server 200 (S205). In the process of storing in the database 225 the registration value, the transmission/reception unit 212 of the server 200 receives the aforementioned registration value sent from the transmission/reception unit 112 of the client 100, and the data registration unit 210 of the server 200 stores the data of the aforementioned registration value received from the client 100 to the database 225. Note that the existence of the pseudo-random number generator 114 prevents identical information from being registered in the database 225 even when a same message "mi" is input.

Next, the data registration unit 110 applies the random number "ri" to the homomorphic function "F" (S206) and performs hashing by applying the result obtained at S206 to the hash function 113A (S207). Further the data registration unit 110 sends to the server 200 a request to store in the database 225 the hashed value (output value) obtained at step S207 in association with the aforementioned registration value (value registered at step S205) for registering in the database 225 of the server 200 (S208). In the process of registering the aforementioned output value to the database 225, the transmission/reception unit 212 of the server 200 receives the aforementioned output value sent from the transmission/reception unit 112 of the client 100, and the data registration unit 210 of the server 200 stores data of the aforementioned output value acquired from the client 100 into the database 225 in association with the aforementioned registration value.

An exclusive OR of the information "Ci" and the random number "ri" calculated at aforementioned step S204, and the hash value of the value acquired by applying to a homomorphic function the random number "ri" calculated at step S207 are registered in association with each other in the database 225 of the server 200 through the above processes.

### ---Second Example of Procedure---

Next, a data search process performed by the system 10 will be described.

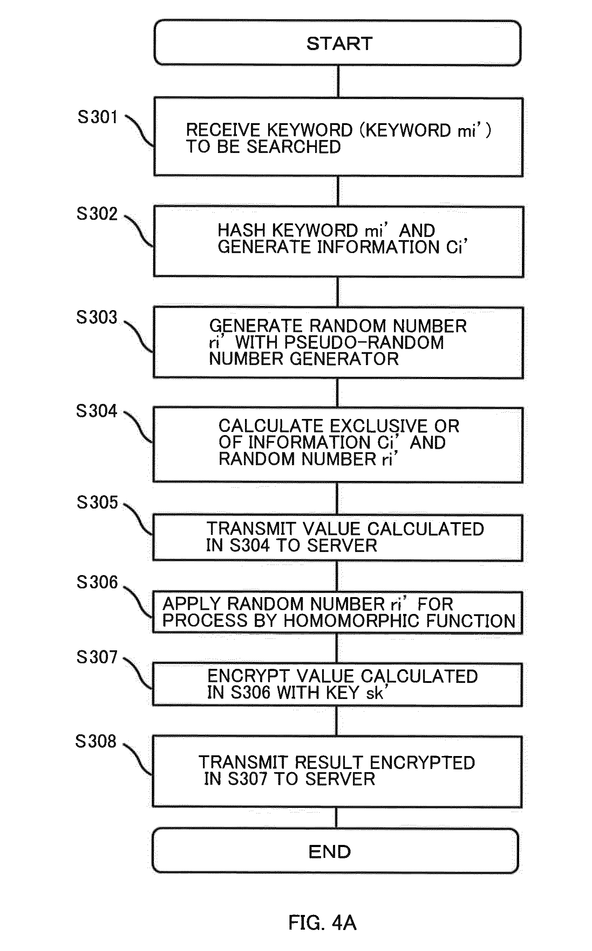

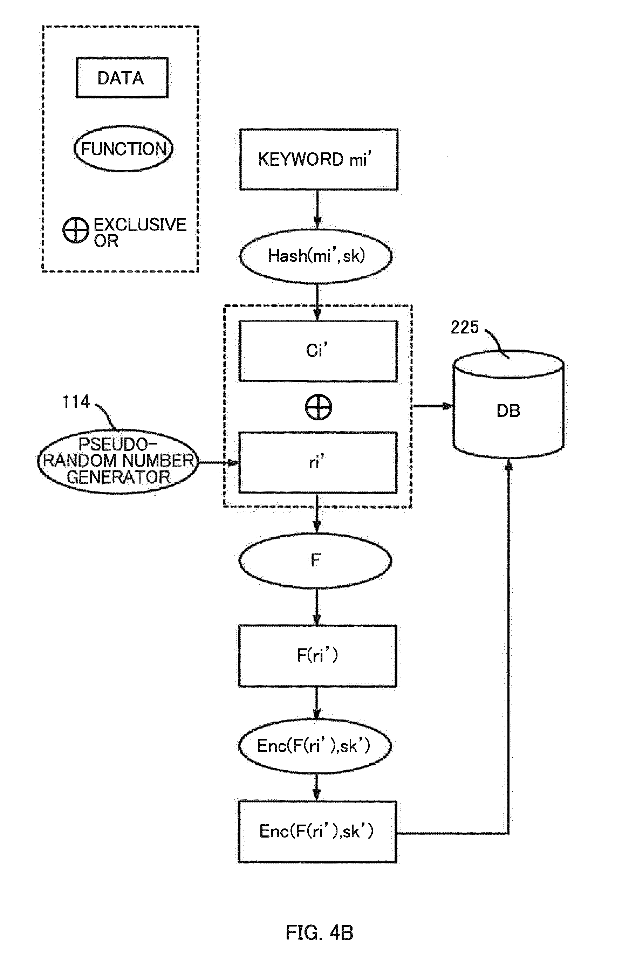

Fig. 4A is a flowchart illustrating a second example of the secure search processing method according to the present embodiment and Fig. 4B is a diagram illustrating the concept of the second example of the secure search processing method according to the present embodiment. In this case, the data search unit 111 of the client 100 receives the keyword "mi'" which the user wants to search at the input unit 105 (S301), and hashing is performed by applying the hash function 113A to the keyword "mi'" to generate information "Ci'" (second information) (S302).

Subsequently, the data search unit 111 generates the random number "ri'" (second random number) with the pseudo-random number generator 114 (S303). This random number "ri'" differs from the random number "ri" generated at above step S203.

Further, the data search unit 111 calculates the exclusive OR of the aforementioned information "Ci'" and the random number "ri'" (S304), and sends the search value that is the calculation result to the data search unit 211 of the server 200 via the transmission/reception unit 112 (S305).

Next, the data search unit 111 applies the above random number "ri'" to the homomorphic function "F" to calculate F(ri') (S306). Further, the data search unit 111 encrypts the process result F(ri') that is the process result at step S306 using the sk' 113B that is the key for encryption (S307), and sends this encrypted result to the data search unit 211 of the server 200 via the transmission/reception unit 112 (S308).

In the aforementioned transmission of the search value and the encrypted result to the server 200, the transmission/reception unit 212 of the server 200 receives the data sent from the transmission/reception unit 112 of the client 100 for processing by the data search unit 211 of the server 200.

Note that in above step S307, encryption using the sk' 113B that is the key for encryption is performed for the purpose of ensuring security of communication over the transmission path, that is, the network 120 connecting the client 100 and the server 200. Therefore, such encryption may be omitted when there is ensured an environment in which F(ri') is securely transmitted from the data search unit 111 of the client 100 to the data search unit 211 of the server 200. Or reversely, when the key sk' 113B is employed as a secret key that can be held only by the true client 100 is used to perform encryption during communication with the server 200, verification of this secret key can be used instead of user authentication of the client 100 to further improve the security.

According to the above process, the data search unit 211 of the server 200 retains the exclusive OR value (search value) calculated by the client 100 at step S304, and information F(ri') calculated using the homomorphic function at step S306.

### ---Third Example of Procedure---

Next, processing during data search in the data search unit 211 of the server 200 from aforementioned step S308 and thereafter will be described.

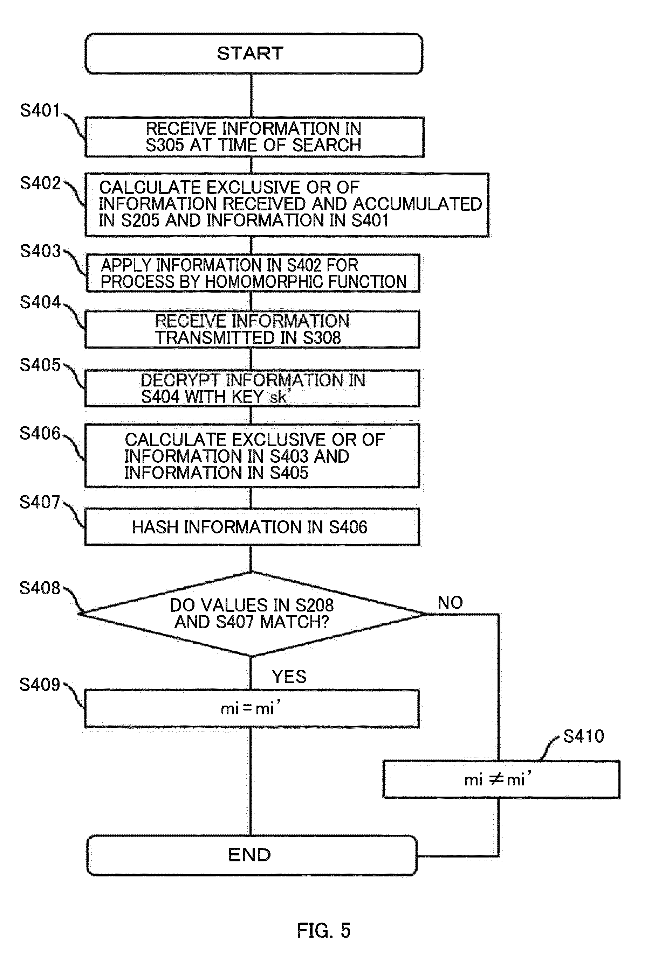

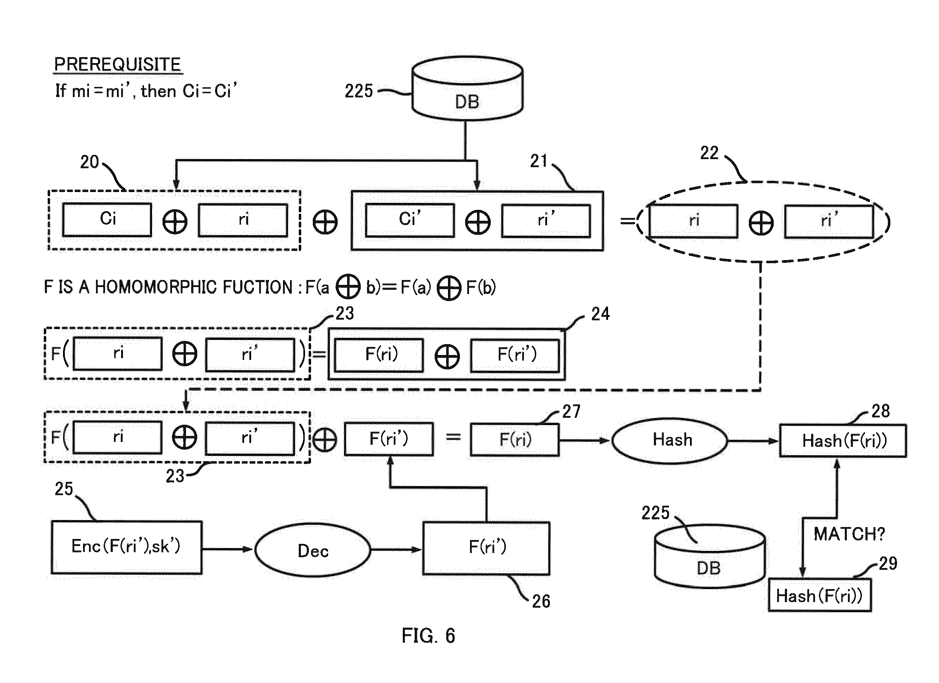

Fig. 5 is a flowchart illustrating a third example of the secure search processing method according to the present embodiment and Fig. 6 is a diagram illustrating the concept of the third example of the secure search processing method according to the present embodiment.

At this time, the database 225 of the server 200 has registered therein a value of the exclusive OR (registration value) of information "Ci" obtained by encrypting message "mi" that has been received from the client 100 and registered, and random number "ri" generated through the pseudo-random number generator 114 based on, for example, this information "Ci". Further, in the database 225 the value (output value) acquired by hashing the result F(ri) obtained by applying random number "ri" to the homomorphic function "F" is stored in association with the aforementioned registration value.

Here, the data search unit 211 of the server 200 receives an exclusive OR of the information "Ci'" and the random number "ri'", that is, the search value 21 sent from the client 100 in the aforementioned step S305 (see Fig. 6) (S401), and calculates the exclusive OR 22 of this search value 21 and registration values 20 (accumulated by performing step S205 above, and is an exclusive OR of information "Ci" and random number "ri", see Fig. 6) in the database 225 (S402).

To give a more specific example, when the keyword "mi'" is "abc", the value with a predetermined number of digits of "101010 ... 01" obtained by coding "abc" is assumed to be "11100 ... 11" that is the information "Ci'" encrypted with the key sk' 113B. Random number "ri'" is assumed to be "00110 ... 01" having the same number of digits as information "Ci'". At this time, the exclusive OR 22 of information "Ci'" and random number "ri'", that is, the search value 21, is "11010 ... 10". Further, the registration value 20 in the database 225, that is, the exclusive OR of information "Ci" and random number "ri", is assumed to be "10110 ... 00" with the same number of digits as the aforementioned search value 21. In this case, the exclusive OR of the search value 21 and the registration value 20 is "01100 ... 10".

Note that, based on the precondition that information "Ci" and information "Ci'" are equal when the message "mi" registered in the database 225 and the keyword "mi'" searched by the user match, the exclusive OR of the above registration value 20 (exclusive OR at the time of registration) and the search value 21 (exclusive OR at the time of search) is equal to the exclusive OR 22 of the random number "ri" at the time of registration and the random number "ri'" at the time of search, due to the characteristics of the exclusive OR.

Further, the data search unit 211 applies the calculation result 22 of the exclusive OR of the search value and the registration values calculated at step S402 above to the homomorphic function F and obtains the process result 23 (S403). Here, the value 23 obtained by calculating the exclusive OR of random number "ri" and random number "ri'" with the homomorphic function F and the value 24 obtained by calculating the exclusive OR of the value obtained by calculating the random number "ri" with the homomorphic function F and the value obtained by calculating the random number "ri'" with the homomorphic function F become equal.

Subsequently, the data search unit 211 receives the encrypted result 25 of the value obtained by applying random number "ri'" to the homomorphic function F, sent from the client 100 at above step S308 (S404), decodes the received encrypted result 25 received with the key sk' 113B for encryption to obtain F(ri') as the decrypted result 26 (S405).

Further, the data search unit 211 calculates the exclusive OR 27 of the value 26 decrypted at above step S405 and the process result 23 obtained at above step S403 (S406). F(ri') is canceled and F(ri) can be derived as the exclusive OR 27 when an exclusive OR of the value 23 obtained by calculating with the homomorphic function F the exclusive OR of the random number "ri" and the random number "ri'", and the value 26 obtained by calculating with the homomorphic function F the random number "ri'", due the characteristics of the homomorphic function.

Further, the data search unit 211 obtains the hash value 28 by applying the calculation result 27 to the hash function 113A (S407), uses this as the key to search for the output value 29 (value accumulated at step S208) of the above hash function 113A associated with the registration values in the database 225, and determines whether they match or not (S408).

As a result of this determination, when the hash value 28 obtained at step S407 and the output value 29 (value registered at step S208) registered in the database 225 match (S408: YES), the data search unit 211 returns to the client 100 a search result indicating that registration data "mi" that matches "mi'" that is the search keyword specified by the user exists in the database 225 (S409) and terminates the process.

On the other hand, as a result of the above determination, when the hash value 28 obtained at step S407 and the output value 29 (value registered at step S208) registered in the database 225 do not match (S408: NO), the data search unit 211 returns to the client 100 a search result indicating that registration data "mi" that matches "mi'" that is the search keyword specified by the user does not exist in the database 225 (S410) and terminates the process.

Subsequently, a description will be given of an example of applications of the secure search processing system of the present embodiment.

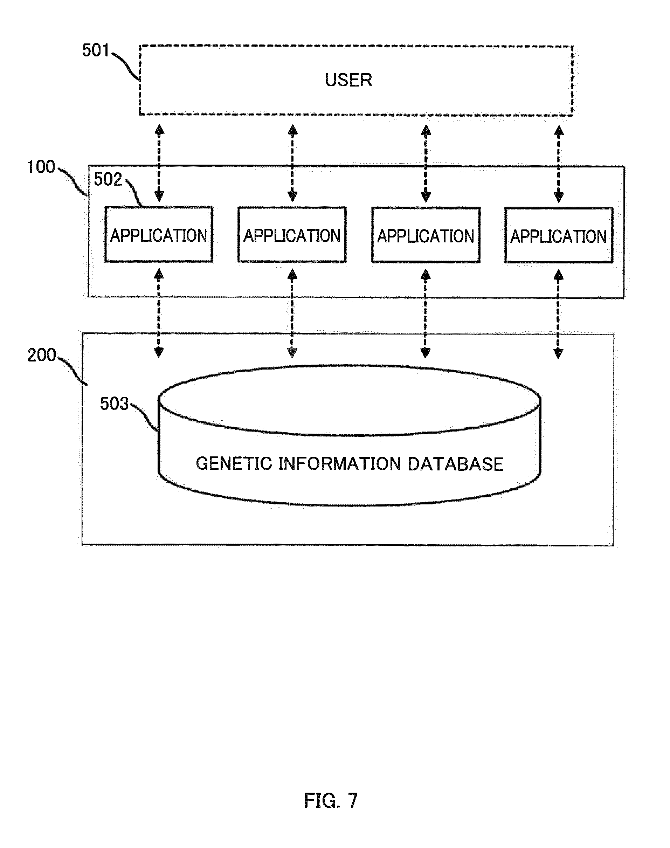

Fig. 7 is a diagram illustrating an example of a first application of the secure search processing system. In the example shown in Fig. 7, a genetic information database 503 storing genetic information of the user is the database of the server 200. Here, as mentioned above, when the key sk' 113B is such that it is incapable of being decrypted, the risk of genetic information leaking from the server 200 can be greatly reduced. In other words, genetic information cannot be acquired without searching the entire text one item at a time in a brute-force attack, so that decryption of genetic information using the key sk' 113B would be very difficult. Therefore, key management risk is dramatically reduced such as when the key sk' 113B has been compromised or when the key sk' 113B is entrusted to business operators and the like.

Application 502 of the client 100 has, for example, the ability to provide constitutional risk information to an individual based on that individual's genetic information. The user 501 can search whether the sequence (keyword "mi'" to be searched) provided by the application 502 is included in the genetic information (registered information "mi") of the user himself/herself registered in the genetic information database 503. The application 502 determines the constitutional risk to the user 501 according to whether or not the search result shows that "mi'" and "mi" match, and notifies the user to that effect by displaying the determination result on the output unit 106 or the like. At that time, the client 100 merely handles the determination result based on whether the information "mi'" exists in the genetic information database 503 or not, and not the genetic information of the user 501. Further, the server 200, in response to a request from the client 100, merely detects whether or not information "mi'" exists in the genetic information database 503, and both the client 100 and the server 200 can provide services without implicating the genetic information of the user 501 at all.

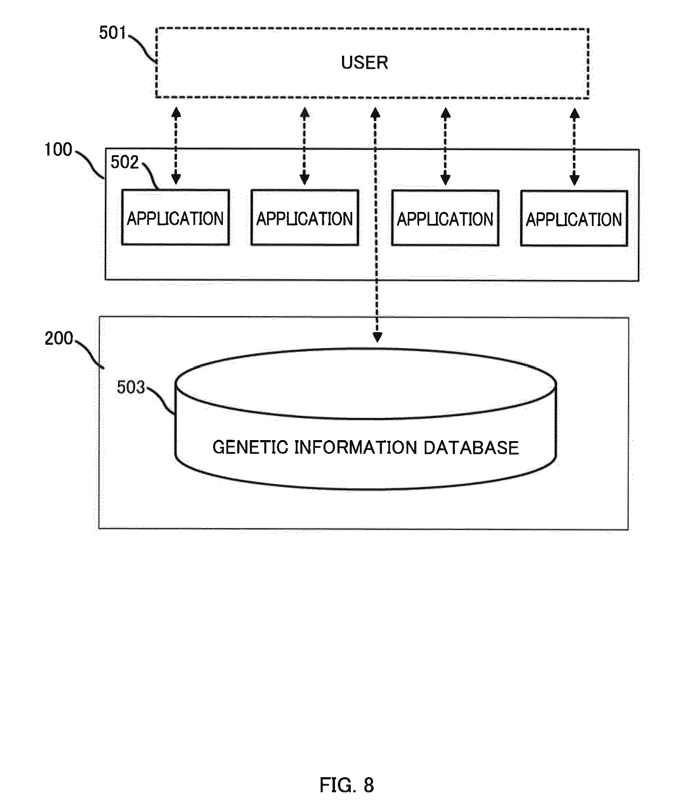

Note that, as shown in the example of Fig. 8, the security of genetic information will be further improved when processing is performed in a form where the search for genetic information does not involve the application 502. In this case, the user 501 accesses the sever 200 via an application other than the application 502 of the client 100 and the client 100 searches for genetic information in the server 200 by after passing a predetermined user authentication.

In connection with the operation of the above service, a server of another business operator different from the business operator of the database 503 may manage the hash functions 113A of their respective users and the server of this other business operator may provide the hash functions 113A to the appropriate client 100 for each user. In this case, it is preferable to prevent attacks (fraudulent use of the hash function 113A) by a malicious third party within the business operation by concurrent use of an appropriate authentication means such as password authentication when using the hash function 113A.

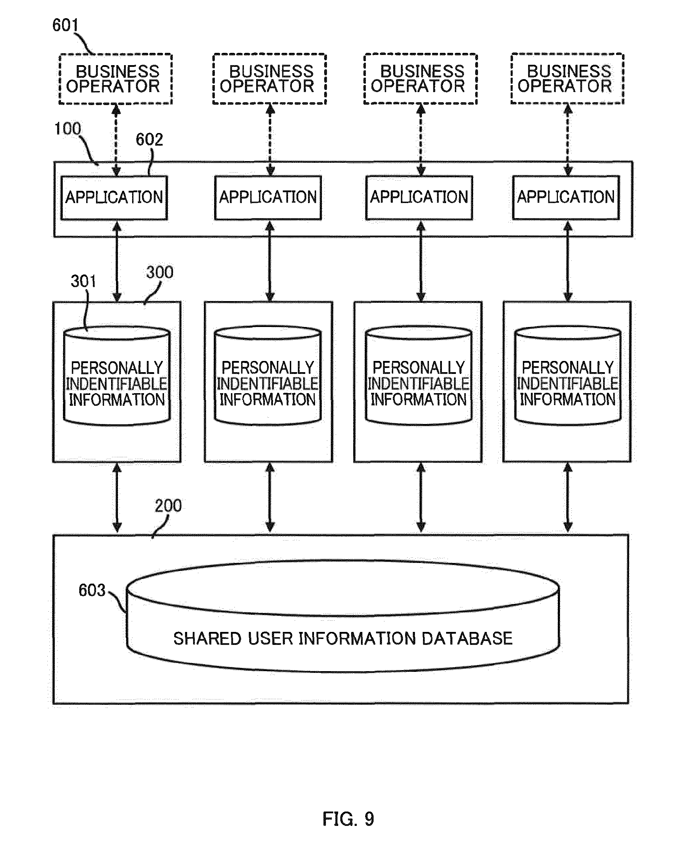

Fig. 9 is a diagram illustrating an example of a third application of the secure search processing system. In the case of this example, the server 200 (second information processing apparatus) retains the above database as a shared user information database 603 that is shared between business operators. It is preferable that information that can identify an individual and information besides such (information that cannot identify an individual by itself) is separated in order to reduce the risk of compromising personally identifiable information. However, it has conventionally been difficult to search or perform authentication using information that can identify an individual in the shared user information database 603 when such configuration has been adopted.

On the other hand, in the system configuration example of the present embodiment shown in Fig. 9, the other server 300 (first information processing apparatus) retains in the storage device the same key (information identifying individual 301) as the key sk' 113B retained by the client 100. The server 300 decrypts with the key sk' 113B the encrypted result (that received at above step S404) received by the application 602 of the client 100, calculates the exclusive OR of this decrypted value and the value obtained at above step S403, and sends to the server 200 a search request using the value obtained by applying this calculation result to the hash function 113A as the key. Note that application 602 is an application similar to the above application 502 and provides constitutional risk information according to the DNA sequence.

On the other hand, the server 200 performs a process of receiving a search request from the server 300, searching with the above key for the output value of the hash function 113A with which a registration value in the shared user information database 603 is associated, and returning the search result to the server 200. In this case, the server 300 returns to the client 100 the search result returned from the server 200. The application 602 of the client 100 receives the above search result and displays the search result on the output unit 106 for presentation to the user such as the business operator 601.

When such a configuration is adopted, the administrator of the server 200 (second information processing apparatus) retaining the database of personally identifiable information, in other words, the shared user information database 603, differs from the administrator of the server 300 (first information processing apparatus) that leads the search process according to the search request from the client 100, so that management of the hash function, keys and the like required for the search process is performed only by the server 300. Therefore, search and collation of personally identifiable information can be performed by only the server 300 and the server 200 retaining the shared user information database 603 does not have access to genetic information and the like which is personally identifiable information (information that alone can identify an individual). Accordingly, the time required for managing the databases, keys and hash functions and the like is reduced, thereby easing the burden of managing personally identifiable information under good security.

Note that each of the embodiments described above are examples employing the hash function 113A as the one-way function. In the embodiments implementing the hash function 113A, information Ci is a fixed value regardless of the size of the message mi so that the hash function 113A is also effective in compressing data in addition to converting message mi into undecryptable information Ci. Additionally, in the embodiments, irreversible encryption methods other than the hash function 113A may be employed as the one-way function. In other words, any method may be employed as long as the unencrypted data cannot be decrypted from the encrypted data. For example, a one-way function can be used as one key of a set of keys in the various encryption methods. Further with regard to the key sk' 113B, an example is shown where a common key is used by the client 100 and the server 200, that is, an example using a key in the common key system. However, alternatively, various methods such as a digital signature method usable in encryption may be employed. Further, as have been already been mentioned, there can be considered a method that does not use a key, in other words, a method that does not perform encryption of F(ri') may be employed when the network 120 between the client 100 and the server 200 is secure.

Although the best modes for implementing the invention have been specifically described above, the present invention is not limited thereto and can variously be modified without departing from the spirit thereof.

According to the embodiments above, information in the database is prevented from being decrypted while maintaining a searchable state by using an undecryptable key (e.g., the hash function being a one-way function) as the encryption key for the search target information when registering or when registering and searching for the search target information in the database. In this way, searching in an encrypted state as well as secure management of personally identifiable information becomes possible.

For example, given a policy of minimizing the risk of information leakage, it has conventionally been difficult to check in a data center information based on information that identifies individuals and the veracity of the data as the check result will be lost when information capable of identifying an individual with regard to search target information cannot be retained in the data center. By contrast, the technology of the present embodiment allows management of undecryptable and searchable information and fulfill the demands for searching, checking and the like so that veracity of the acquired information can be secured while avoiding the risk of information leakage. Further, the risk of information leakage can be further reduced by making sensitive information undecryptable as in the present embodiment when handling sensitive information such as genetic information.

Thus the time and effort required for managing the user's keys can be reduced and information management risk when a leakage of the key occurs can be reduced in secure search technology according to the present embodiment.

At least the following will become apparent from the description in the present specification. In other words, the secure search processing system can further include a terminal having a storage device having stored therein a one-way function and a random number generator, and a processor that performs a process of calculating first information by applying a search target information to a one-way function, generating a first random number with a random number generator, calculating an exclusive OR of the first information and the first random number, and sending to the information processing apparatus a request including a registration value that is the calculation result to store into a database, and a process of applying to a one-way function the result obtained by applying the first random number to a predetermined homomorphic function, and sending to the information processing apparatus a request including the output value of the one-way function to store into the database associatively with the registration value. In this case, the processor of the information processing apparatus further performs a process of receiving from the terminal the above registration value and output value and storing the values into the database of the storage device.

According to this system, a registration process of the search target information can be performed from the client (terminal) over the network when personally identifiable information such as genetic information is managed by the server (information processing apparatus) on the network, thus improving the convenience of information management.

Further, in the secure search processing system, the processor of the terminal may be made to further receive at the input interface a keyword used for searching, calculate an exclusive OR of second information obtained by applying the received keyword to a one-way function and a second random number obtained with a random number generator, and transmit to the information processing apparatus a value obtained from a process of sending to the information processing apparatus the search value that is the calculation result and applying the second random number to a homomorphic function. In this case, the processor of the information processing apparatus performs a process of receiving the above search value from the terminal and calculating an exclusive OR of the search value and the registration values in the database, and a process of receiving from the terminal the value obtained by applying the above second random number to a homomorphic function, calculating an exclusive OR of the value received and the value obtained by applying to a homomorphic function the calculation result of an exclusive OR of the search value and the registration values, and searching the output result of the one-way function having associated therewith the registration values in the database using as the key the value obtained by applying the calculation result to a one-way function, and returning the search result to the terminal.

According to this system, a search request can be made from the client (terminal) over the network when personally identifiable information such as genetic information is managed by the server (information processing apparatus) on the network, thus improving the convenience of information search.

Further, in the secure search processing system, the storage device of the terminal further retains a key for encryption and the processor of the terminal may be made to further perform a process of encrypting with the key the value obtained by applying the second random number to a homomorphic function and sending the encrypted result to the information processing apparatus. In this case, the storage device of the information processing apparatus retains the same key as that retained by the terminal, and the processor of the information processing apparatus further performs a process of decrypting the encrypted result received from the terminal with the key, calculating an exclusive OR of the decrypted value and the value obtained by applying to a homomorphic function the calculation result of the exclusive OR of the search value and the registration values, searching the output result of the one-way function having associated thereto the registration values in the database using as the key the value obtained by applying the calculation result to a one-way function, and returning the search result to the terminal.

According to this system, good security can be provided when sending and receiving process data relating to personally identifiable information such as genetic information between the server and the client over the network.

Further, in the secure search processing system, the storage device of the terminal further retains a key for encryption and the processor of the terminal may be made to further perform a process of encrypting with the key the value obtained by applying a second random number to a homomorphic function and transmitting the encrypted result to the first information processing apparatus. In this case, the storage device of the first information processing apparatus retains the same key as that retained by the terminal and the processor of the first information apparatus performs a process of decrypting with the key the encrypted result received from the terminal, calculating an exclusive OR of the decrypted value and the value obtained by applying to a homomorphic function the calculation result of the exclusive OR of the search value and the registration values, transmitting to the second information apparatus a search request using as the key the value obtained by applying the calculation result to a one-way function, and returning to the terminal the search result returned from the second information processing apparatus. Further, the storage device of the second information processing apparatus has stored therein the above database, and the processor of the second information processing apparatus performs a process of receiving a search request from the first information processing apparatus, performing a search with the above key in the database for the output value of the one-way function having associated thereto registration values, and returning the search result to the first information processing apparatus.

According to this system, the administrator of the second information processing apparatus retaining the database of personally identifiable information differs from the administrator of the first information processing apparatus leading the search process in accordance to the search request from the client so that the management of the one-way function such as the hash function requiring a search process is performed only by the first information processing apparatus. Therefore, searching and checking personally identifiable information can be performed with only the first information processing apparatus, and the second information processing device retaining the database does not have access to personally identifiable information. Thus, the time and effort required for managing the database, hash function and the like is reduced and management of personally identifiable information can be performed under good security.

## Claims

1. A secure search processing system including an information processing system, comprising:
a storage device that stores a database having stored a registration value that is a value of an exclusive OR of first information obtained by applying a search target information to a one-way function and a first random number, and an output value obtained when applying to the one-way function a result obtained by applying the first random number to a predetermined homomorphic function; and
a processor configured to:
calculate an exclusive OR of second information obtained by applying to the one-way function a keyword for search received by an input interface and a second random number obtained with a random number generator to obtain a first calculation result, and calculate an exclusive OR of a search value that is the first calculation result and registration values in the database to obtain a second calculation result; and
calculates an exclusive OR of a value obtained by applying to the homomorphic function the second calculation result of the exclusive OR of the search value and the registration values, and a value obtained by applying the second random number to the homomorphic function to obtain a third calculation value, search for an output value of the one-way function to which the registration values are associated in the database using as a key a value obtained by applying the third calculation result to the one-way function, and output a search result to an output interface.

2. The secure search processing system according to claim 1 further comprising a terminal, the terminal including:
a storage device that stores a one-way function and a random number generator; and
a processor configured to:
calculate first information by applying a search target information to the one-way function, generating a first random number with the random number generator, calculating an exclusive OR of the first information and the first random number to obtain a fourth calculation result, and sending to the information processing apparatus a request including a registration value that is the fourth calculation result to store in the database; and
apply to the one-way function a result obtained by applying the first random number to a predetermined homomorphic function, and send to the information processing apparatus a request including an output value of the one-way function to store in the database associatively with the registration value,
wherein the processor of the information processing apparatus further receives the registration value and the output value from the terminal, and stores the registration value and the output value in the database of the storage device.

3. The secure search processing system according to claim 2, wherein
the processor of the terminal further executes:
receiving the keyword for search at an input interface, calculating an exclusive OR of second information obtained by applying the received keyword to the one-way function and a second random number obtained with the random number generator to obtain a fifth calculation result, and transmitting a search result that is the fifth calculation result to the information processing apparatus; and
transmitting a value obtained by applying the second random number to the homomorphic function, to the information processing apparatus, and
the processor of the information processing apparatus performs:
receiving the search value from the terminal, and calculating an exclusive OR of the search value and the registration values in the database to obtain a sixth calculation result; and
receiving from the terminal the value obtained by applying the second random number to the homomorphic function, calculating an exclusive OR of the received value and a value obtained by applying to the homomorphic function the sixth calculation result of the exclusive OR of the search value and the registration values to obtain a seventh calculation result, searching for an output value of the one-way function to which the registration values in the database are associated using as a key a value obtained by applying the seventh calculation result to the one-way function, and returning a search result to the terminal.

4. The secure search processing system according to claim 3, wherein
the storage device of the terminal further retains a key for encryption;
the processor of the terminal further executes encrypting with the key the value obtained by applying the second random number to the homomorphic function, and transmitting an encrypted result to the information processing apparatus;
the storage device of the information processing apparatus retains the same key as the key retained by the terminal; and
the processor of the information processing apparatus further executes decrypting with the key the encrypted result received by the terminal, calculating an exclusive OR of a decrypted value and the value obtained by applying to the homomorphic function the sixth calculation result of the exclusive OR of the search value and the registration values to obtain an eighth calculation result, searching for an output value of the one-way function with which the registration values in the database are associated using as a key a value obtained by applying the eighth calculation result to the one-way function, and returning a search result to the terminal.

5. The secure search processing system according to claim 3, wherein
the storage device of the terminal further retains a key for encryption;
the processor of the terminal further executes encrypting with the key a value obtained by applying the second random number to the homomorphic function, and transmitting the encrypted result to a first information processing apparatus;
a storage device of the first information processing apparatus retains the same key as the key retained by the terminal;
a processor of the first information processing apparatus executes decrypting with the key the encrypted result received by the terminal, calculating an exclusive OR of a decrypted value and the value obtained by applying to the homomorphic function the sixth calculation result of the exclusive OR of the search value and the registration values to obtain an eighth calculation result, transmitting to a second information apparatus a search request using as a key a value obtained by applying the eighth calculation result to the one-way function, and returning a search result returned from the second information apparatus to the terminal;
a storage device of the second information apparatus has stored therein the database; and
a processor of the second information apparatus receives the search request from the first information processing apparatus, executes a search using the key for an output value of the one-way function to which the registration values in the database are associated, and returns a search result to the first information processing apparatus.

6. A secure search processing method implemented in an information processing apparatus storing in a storage device a database storing in association with each other a registration value that is an exclusive OR of first information obtained by applying a search target information to a one-way function and a first random number, and an output value obtained when applying to the one-way function a result obtained when applying the first random number to a predetermined homomorphic function, the secure search processing method comprising:
calculating an exclusive OR of second information obtained by applying to the one-way function a keyword for search received at an input interface and a second random number obtained with a random number generator to obtain a first calculation result, and calculating an exclusive OR of a search value that is the first calculation result and registration values in the database to obtain a second calculation result, and
calculating an exclusive OR of a value obtained by applying to the homomorphic function the second calculation result of the exclusive OR of the search value and the registration values, and a value obtained by applying the second random number to the homomorphic function to obtain a third calculation result, and searching for an output value of the one-way function to which registration values in the database are associated using as a key a value obtained by applying the third calculation result to the one-way function, and outputting a search result to an output interface.
